# EUROPÄISCHE PATENTANMELDUNG

(11) **EP 2 077 399 A1**
(43) Veröffentlichungstag der Anmeldung: **08.07.2009**
(21) Anmeldenummer: 08015512.0
(22) Anmeldetag: 03.09.2008
(51) Int. Cl.: F16D 13/64, F16D 13/70, F16D 69/04

(54) **Reibkupplung mit balligen Reibkontaktpartnern**

(30) Priorität: 27.09.2007 DE 102007046244
(71) Anmelder: LuK Lamellen und Kupplungsbau Beteiligungs KG, 77815 Bühl (DE)
(72) Erfinder: Czygan, Oliver, Dr., 76448 Durmersheim (DE); Fidlin, Alexander, Dr., 76149 Karlsruhe (DE); Keck, Holger, 77866 Rheinau (DE); Raber, christoph, 66564 Ottweiler-Steinbach (DE); Hässler, Martin, Dr., 76676 Graben-Neudorf (DE); Rusch, Alain, 67840 Kilstett (FR)

(57) **Zusammenfassung**

Kupplungsvorrichtung, insbesondere Reibungskupplung, mit gekrümmter Anpressplatte (40,140) und gekrümmtem Reibbelag (30,130,230).

## Beschreibung

Die Erfindung betrifft eine Kupplungsvorrichtung, insbesondere Reibungskupplung für ein Kraftfahrzeug nach dem Oberbegriff von Anspruch 1.

### Stand der Technik

In Reibungskupplungen kommt eine Übertragung von Drehmoment durch Verkleinern des Abstandes zwischen der Anpressplatte und der Druckplatte eines Schwungrades zu Stande. Im Bereich zwischen Druckplatte und Anpressplatte ist die Kupplungsscheibe in der Regel mit Reibbelägen versehen. Wird die Reibungskupplung geschlossen, stellt häufig ein Reibbelag den Kontakt zur Druckplatte und ein zweiter Reibbelag den Kontakt zur Anpressplatte her. Beide Reibbeläge sind häufig gegeneinander mit Hilfe einer Belagfederung abgefedert und übertragen das Drehmoment mittels Belagträgern auf die radial inneren Bereiche der Kupplungsscheibe. Beim Schließen der Kupplung wird der Anpressplatte auf deren Reibfläche einseitig Wärme zugeführt, wenn Drehmoment übertragen wird. Es kommt zur so genannten "Schirmung", wenn die radial äußeren Bereiche der Anpressplatte sich von den radial äußeren Bereichen des Reibbelags entfernen und sich auf diese Weise der effektive mittlere Reibradius verringert. Dies kann durch die Temperaturdifferenz zwischen der dem Reibbelag zugewandten sowie der abgewandten Seite der Anpressplatte kommen. Um die Auswirkung der Schirmung gering zu halten, wurde im Stand der Technik offenbart, die Anpressplatte konisch zu gestalten. Nachteilig ist dabei, dass die Anpressplatte nur unter ganz bestimmten Bedingungen tatsächlich eben ist.

In der Offenlegungsschrift DE 102 36 533 A1 wird eine Anpressplatte offenbart, die eine konvexe Reibfläche aufweist und der Reibbelag der Kupplungsscheibe der der Anpressplatte zugewandten Seite eine entsprechende konkave Form aufweist.

Unter thermischer Last führen die im Stand der Technik vorgeschlagenen Reibpaarungen von Reibungskupplungen zu lokalem Tragverhalten. Das lokale Tragverhalten reduziert den Reibwert und damit das übertragbare Kupplungsmoment. Im Fahrzeug kann dies speziell bei höheren Reibleistungen, beispielsweise bei Anfahrten am Berg zum Rutschen der Kupplung führen.

Aufgabe der vorliegenden Erfindung ist daher, eine Kupplungsvorrichtung vorzuschlagen, durch welche es möglich wird, unter thermischer Last ein größeres übertragbares Kupplungsmoment zur Verfügung zu stellen.

Diese Aufgabe wird durch eine Kupplungsvorrichtung mit den Merkmalen gemäß Anspruch 1 gelöst.

Erfindungsgemäß wird die Aufgabe dadurch gelöst, dass in einer Kupplungsvorrichtung eine Anpressplatte vorgesehen ist, die im Querschnitt an der Reibflächenseite eine konkave Krümmung aufweist. Der Reibbelag an der, der Anpressplatte zugewandten Seite, weist im Querschnitt eine konvexe Krümmung auf. Dabei ist vorgesehen, dass der Krümmungsradius der konkaven Krümmung der Anpressplatte kleiner ist als der Krümmungsradius der konvexen Krümmung des Reibbelags.

Der Krümmungsradius der konkaven Krümmung der Anpressplatte und/oder der Krümmungsradius der konvexen Krümmung des Reibbelags kann entlang der Krümmungslinie, die sich im Querschnitt ergibt, unterschiedliche Werte haben.

In einer weiteren Ausführungsform ist vorgesehen, dass der konvex gekrümmte Reibbelag federnd auf der Kupplungsscheibe befestigt ist. Diese Federung ist dabei so gewählt, dass durch sie im Wesentlichen der Krümmungsradius des Reibbelags veränderbar ist.

In einer speziellen Ausführungsform ist die Federung des konvex gekrümmten Reibbelages durch eine, zumindest auf der im Reibbelag zugewandten Seite, im Querschnitt konvex gekrümmtes Federblech ausgeführt.

Alternativ oder kumulativ zur Federung des Reibbelages ist vorgesehen, dass die konkav gekrümmte Anpressplatte federnd auf einem Anpressplattenträger befestigt ist, wobei durch eine solche Federung im Wesentlichen der Krümmungsradius der Anpressplatte veränderbar ist.

Kern der Erfindung ist also die günstige Beeinflussung der Druckverteilung zwischen den Reibpartnern im Reibkontakt. Auf diese Weise kann lokales Tragverhalten vermieden werden und das Drehmoment wird insbesondere bei voller Anpressung unabhängig von Bauteilverformungen über die gesamte dafür vorgesehene Fläche der Reibpaarung übertragen.

Die Erfindung wird anhand der Figuren 1 bis 3 näher erläutert. Dabei zeigen:
- Figur 1: schematisch eine besonders bevorzugte Ausführungsform eines Details einer Kupplungsvorrichtung,
- Figur 2: ein weiteres vorteilhaftes Ausgestaltungsbeispiel einer im Detail und schematisch dargestellten Kupplungsvorrichtung
und
- Figur 3: ein weiteres vorteilhaftes Ausgestaltungsbeispiel einer im Detail und schematisch dargestellten Kupplungsvorrichtung.

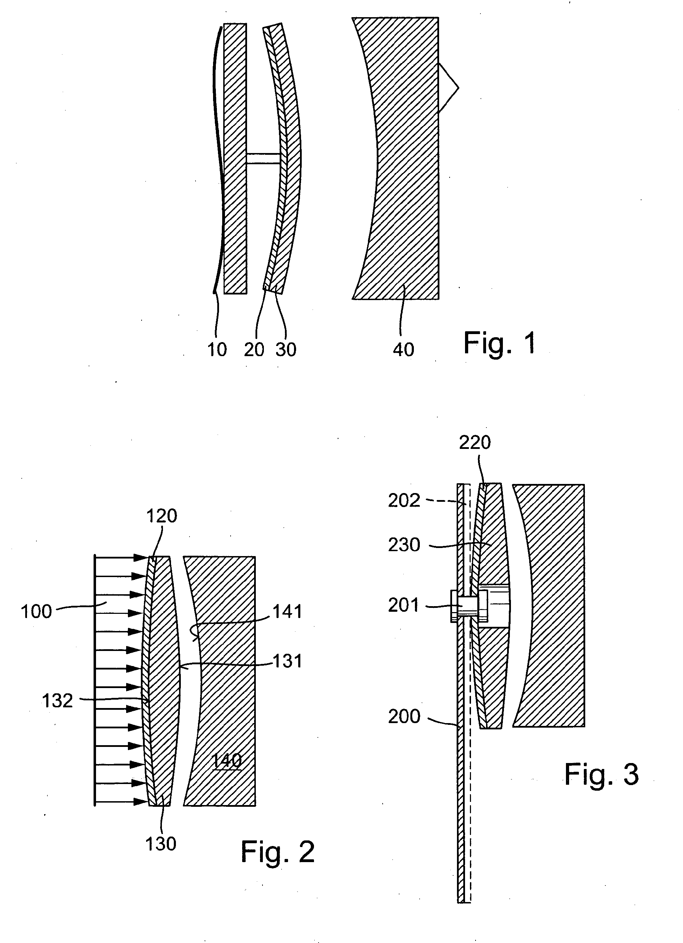

In Figur 1 ist schematisch der prinzipielle Aufbau einer besonders bevorzugten Ausführungsform der Erfindung dargestellt. Dabei ist in einem 2D-Schnitt die Anpressplatte 40, sowie die anpressplattenseitige Kupplungsscheibenhälfte, die eine Belagfederung 10, ein Federblech 20, eine Vorrichtung zur Verbindung der Belagfederung 10 mit dem Federblech 20 sowie einen Reibbelag 30 umfasst, dargestellt. Der auf dem Federblech 20 befestigte Reibbelag 30 sowie die Anpressplatte 40 stellen zwei ballige Reibpartner mit unterschiedlichen Krümmungs- bzw. Rundungsradien, zumindest solange kein Reibkontakt zwischen den Reibpartnern vorliegt, dar. Auf Grund der unterschiedlichen Radiendimensionierung im kontaktfreien Zustand kommt es beim Schließen der Kupplung aus dem geöffneten Zustand im radial äußeren und/oder radial inneren Bereich zur ersten Kontaktbildung zwischen Reibbelag 30 und Anpressplatte 40. Bei weiterem Schließen der Kupplung passt sich der Reibbelag auf Grund der federnden Wirkung des Federblechs 20 dem Krümmungs- bzw. Rundungsverlauf der Anpressplatte 40 an. Kommt es zu Schirmungseffekten im radial äußeren Bereich der Anpressplatte 40 tritt auf Grund der federnden Wirkung des Federblechs 20 keine Ablösung des Reibbelags 30 von der Anpressplatte 40 und damit keine Verringerung der effektiven wirksamen Kontaktfläche bzw. des mittleren Reibradius auf. Durch den gekrümmten Verlauf beider Reibpartner entstehen zusätzlich - im Sinne einer Keilwirkung - auch Kräfte in radialer Richtung, welche zur Erhöhung der Reibung beitragen. Aus diesem Grund ist die effektive Anpresskraft größer als die nominelle, axiale Anpresskraft bedingt durch jene zusätzlichen radialen Kraftanteile. Als zusätzlicher Vorteil der Erfindung ist zu sehen, dass die Konstruktion der Kupplungsvorrichtung unempfindlich gegenüber Bauteiltopfung ist. Die Steifigkeit des Federblechs ist auf die geometrischen Abmessungen abzustimmen.

In dem in Figur 2 dargestellten Ausgestaltungsbeispiel werden die Reibflächen 131, 141 der Anpressplatte 140 beziehungsweise des Reibbelags 130 ballig ausgebildet, wobei die Anpressplatte 140 einen negativen, konkaven Ballus aufweist, in den beim Schließen der Kupplungsvorrichtung, das heißt, bei einem Annähern von Reibbelag 130 und Anpressplatte 130, der positive, konvexe Ballus des Reibbelags in schlupfbehafteten Reibkontakt und bei gewünschter komplett geschlossener Reibungsvorrichtung in einen haftenden Reibkontakt gebracht wird. Der Reibbelag 130 ist dabei auf ein Federblech 120 aufgebracht, beispielsweise aufgeklebt und/oder mit nicht dargestellten Nieten vernietet. Das Federblech 120 kann elastische Eigenschaften in der Weise aufweisen, dass eine auf der Rückseite des Federblechs 120 gegen die Schließkraft der Anpressplatte 140 wirkende , durch die eingezeichneten Pfeile angedeutete Gegenkraft unter elastischer Verformung des Federblechs 120 die Reibfläche 131 an die Reibfläche 141 der Anpressplatte anpasst. Vorzugsweise kann hierzu der Radius der Reibfläche 131 größer als der Radius der Reibfläche 141, so dass ein Reibschluss von radial außen nach radial innen erfolgt. Weiterhin ist hierzu das Federblech 120 in radiale Richtung ebenfalls ballig von der Reibfläche 131 wegweisend ausgebildet, wobei die Oberfläche 132 des Reibbelags an den Ballus mit einem sich einstellenden Radius des Federblechs 120, der größer, gleich oder kleiner als der Radius der Reibfläche 131 sein kann, angepasst ist. Zur dauerhaften Einstellung eines vorgegebenen Ballus oder Radius kann das Federblech gegenüber dem Reibbelag 130 vorgespannt sein, so dass eine Rückstellung des bei sich schließender oder geschlossener Kupplungsvorrichtung der deformierte Radius oder Ballus wieder unter Entspannung des Federblechs erfolgt. Die die Gegenkraft der Anpressplatte 140 erwidernde Belagfederung 100 kann in an sich bekannter Weise durch über den Umfang verteilte Federsegmente gebildet sein, die die Verbindung zu den in ähnlicher Weise ausgebildeten Reibelemente zur Anpressplatte und zur gegebenenfalls in der Kupplungsscheibe vorhandenen Dämpfungseinrichtung beziehungsweise zur Nabe bilden.

Figur 3 zeigt ein zur Figur 2 abgewandeltes Ausführungsbeispiel, bei dem die Belagfederung 200 mit dem Federblech 220 beispielsweise mittels über den Umfang verteilter auf einem oder mehreren Durchmessern angeordneter Nieten 201 vernietet ist. Im dargestellten Ausführungsbeispiel kann der Reibbelag 230 mittels im Schnitt nicht sichtbarer, sich mit den Nieten 201 über den Umfang abwechselnder oder an nicht von diesen beanspruchten Plätzen angeordneter Nieten mit dem Federblech vernietet sein. In weiteren Ausgestaltungsbeispielen kann der Reibbelag zusätzlich oder alternativ zu einer Verklebung mit dem Federblech auch mit denselben Nieten, mit denen das Federblech mit der Belagfederung verbunden ist, mit dem Federblech vernietet sein. In dem gezeigten Ausführungsbeispiel stütz sich bei sich schließender oder geschlossener Kupplungsvorrichtung das Federblech 220 an der Belagfederung, die wiederum aus über den Umfang verteilten Federsegmenten gebildet sein kann, ab. Zusätzlich kann ein Verstärkungselement 202, das gestrichelt dargestellt ist, vorgesehen sein, das zwischen der Belagfederung 200 und dem Federblech 220 zur Versteifung der Belagfederung 200 vorgesehen ist und ringförmig oder aus über den Umfang verteilten Ringsegmenten gebildet sein kann. Die Materialeigenschaften des Verstärkungselements 202 hängen von der gewünschten Steifigkeit ab, es kann ein elastischer oder steifer Stahl oder verstärkter Kunststoff verwendet werden. Der Stahl kann gehärtet sein.

### Bezugszeichenliste

- 10: Belagfederung
- 20: Federblech
- 30: Reibbelag
- 40: Anpressplatte
- 100: Belagfederung
- 120: Federblech
- 130: Reibbelag
- 131: Reibfläche
- 132: Oberfläche
- 140: Anpressplatte
- 141: Reibfläche
- 200: Belagfederung
- 201: Niet
- 202: Verstärkungselement
- 220: Federblech
- 230: Reibbelag

## Patentansprüche

1. Kupplungsvorrichtung, insbesondere Reibungskupplung für ein Kraftfahrzeug, mit mindestens einem Reibbelag (30, 130, 230) einer Kupplungsscheibe zwischen einer Schwungscheibe und einer Anpressplatte (40, 140), **dadurch gekennzeichnet, dass** die Anpressplatte (40, 140) im Querschnitt eine konkave Krümmung und der Reibbelag (30, 130, 230) an der der Anpressplatte (40, 140) zugewandten Seite im Querschnitt eine konvexe Krümmung aufweist, wobei der Krümmungsradius der konkaven Krümmung der Anpressplatte (40, 140) kleiner ist als der Krümmungsradius der konvexen Krümmung des Reibbelags (30, 130, 230).

2. Kupplungsvorrichtung nach Anspruch 1, **dadurch gekennzeichnet, dass** der Krümmungsradius der konkaven Krümmung der Anpressplatte und/oder der Krümmungsradius der konvexen Krümmung des Reibbelags (30, 130, 230) entlang der Krümmungslinie im Querschnitt unterschiedliche Werte haben kann.

3. Kupplungsvorrichtung nach Anspruch 1, **dadurch gekennzeichnet, dass** der konvex gekrümmte Reibbelag (30, 130, 230) federnd auf der Kupplungsscheibe befestigt ist, wobei durch die Federung im Wesentlichen der Krümmungsradius des Reibbelags veränderbar ist.

4. Kupplungsvorrichtung nach Anspruch 3, **dadurch gekennzeichnet, dass** die Federung des konvex gekrümmten Reibbelags (30, 130, 230) durch ein zumindest auf der dem Reibbelag (30, 130, 230) zugewandten Seite im Querschnitt konvex gekrümmtes Federblech (20, 120, 220) ausgeführt ist.

5. Kupplungsvorrichtung nach Anspruch 4, **dadurch gekennzeichnet, dass** das Federblech (20, 120, 220) ballig ausgebildet ist.

6. Kupplungsvorrichtung nach Anspruch 4 oder 5, **dadurch gekennzeichnet, dass** das Federblech (220) unter Zwischenlegung eines Verstärkungselements (202) mit der Belagfederung (200) verbunden ist.

7. Kupplungsvorrichtung nach Anspruch 1, **dadurch gekennzeichnet, dass** die konkav gekrümmte Anpressplatte (40, 140) federnd auf einem Anpressplattenträger befestigt ist, wobei durch die Federung im Wesentlichen der Krümmungsradius der Anpressplatte (40) veränderbar ist.
